# EUROPEAN PATENT SPECIFICATION

(11) **EP 1 350 049 B1**
(45) Date of publication and mention of the grant of the patent: **01.09.2004**
(21) Application number: 01986412.3
(22) Date of filing: 12.12.2001
(51) Int. Cl.: F16L 11/12, B32B 1/08

(54) **FLEXIBLE DUCT REINFORCED WITH HIGH-TENSILE STEEL MEMBERS**
BIEGSAME ROHRLEITUNG MIT BEWEHRUNG AUS HOCHFESTEM STAHL
CONDUIT FLEXIBLE RENFORCE PAR DES ELEMENTS EN ACIER HAUTE RESISTANCE

(30) Priority: 20.12.2000 EP 00204663
(43) Date of publication of application: 08.10.2003
(73) Proprietor: N.V. BEKAERT S.A., 8550 Zwevegem (BE)
(72) Inventor: ADRIAENSEN, Ludo, B-8540 Deerlijk (BE); BOURGOIS, Luc, B-8792 Desselgem (BE); MAUER, Daniel, B-7320 Bernissart (BE)
(74) Representative: Messely, Marc, Ir.
(86) International application number: PCT/EP2001/014774
(87) International publication number: WO 2002/050464

(56) References cited:
- EP-A- 0 257 667
- EP-A- 0 314 230
- EP-A- 1 033 435
- EP-A- 1 053 864
- WO-A-00/63601

## Description

### Field of the invention.

The present invention relates to flexible ducts for transporting various types of fluids. The invention is particularly related to flexible ducts for transporting fluids containing gases.

### Background of the invention.

Flexible ducts are widely known.

Depending upon the eventual application, very huge requirements are demanded from flexible ducts. Flexible ducts are expected to function adequately in severe circumstances. The operating temperatures may vary from -200 °C to above +200 °C. The depths at which flexible ducts are used may reach 3000 m or more. Working pressures of 700 bar (10 000 psi) or more are not excluded. In these extreme circumstances flexible ducts must withstand high pressures and exhibit a good chemical resistance against the attack of sour crude oils.

Some of the crude oils comprise sulfides, e.g. hydrogen sulfide H₂S. The steel reinforcement being under stress, the action of the hydrogen sulfide ion HS- may cause hydrogen induced corrosion cracking and sulfide stress corrosion cracking in any steel reinforcement present in the flexible ducts. This phenomenon is widely recognized in the prior art. Generally, this phenomenon has also lead to the use of steel reinforcements where either the carbon content or at least the tensile strength of the steel reinforcement was kept below strict limits. A frequently used rule of thumb is that the surface hardness of the steel reinforcement should be kept below 22 HRc in order to increase the resistance of the steel reinforcement against sulfide stress corrosion. In most cases this means relatively low carbon contents (e.g. below 0.25 %) and certainly low tensile strengths (e.g. below 800 MPa).

Numerous attempts have been made to mitigate the disastrous effects of sulfide stress corrosion. Some attempts were directed at changing the steel composition. Other attempts were more directed at appropriate thermal or thermo-mechanical processing of the steel reinforcements.

In this sense, EP-A-0 375 784 discloses steel reinforcements for flexible ducts. The carbon contents range from 0.40 % to 0.70 %. The tensile strength of the final steel strips, however, remains below 784 MPa.
EP-A-0 478 771 discloses carbon contents ranging from 0.25 % to 0.80 %. Although slightly increased, the tensile strength still remains below 1200 MPa.
EP-A-0 813 613 also discloses carbon contents ranging up to 0.80 %. The mentioned tensile strength level is only about 850 MPa.

### Summary of the invention.

It is an object of the present invention to reduce or avoid the drawbacks of the prior art.
It is another object of the present invention to reduce the dangers of hydrogen induced corrosion cracking and of sulfide stress corrosion cracking.
It is still another object of the present invention to provide flexible ducts, which have a much lower weight than existing flexible ducts.
It is also an object of the present invention to reduce the damages caused to flexible ducts by upheaval buckling.

According to the present invention there is provided a flexible duct, which comprises high-grade fluoropolymers as internal liner, a polymer filler, and at least two layers of elongated steel members as reinforcement. The elongated steel members have a tensile strength of at least 2000 MPa.

The elongated steel members are embedded in the polymer filler so as to form a fully-bonded structure, which means that, next to a mechanical anchoring, there is a chemical bond between the steel members and the polymer of the filler.

The terms "flexible duct" refer to a flexible pipe and to a flexible hose. The terms "high-grade fluoropolymers" refer to either fully fluorinated polymers or to fluoropolymers or copolymers which are not necessarily fully fluorinated and which comprise an ethylene group or an alkoxyl group.
The terms "fully fluorinated polymers" refer to fluoropolymers where a fluor atom replaces all hydrogen atoms in a carbon-hydrogen bond. Such fluoropolymers are chemically inert and have both low and high temperature stability.

Suitable high-grade fluoropolymers are selected from the group consisting of FEP (fluorinated ethylene propylene), PFA (per-fluoroalkoxyl), PTFE (poly-tetra-fluoro-ethylene), and ETFE (ethylene-tetrafluoro-ethylene).
Because of the presence of an ethylene group or of an alkoxyl group in those high-grade fluoropolymers, the high-grade fluoropolymers do not need a plasticizer when used as an inner liner. High-grade fluoropolymers also have in general a higher melting point.
When non-fully fluorinated polymers such as PVDF are used as inner liner, the plasticizer may be leached out at temperatures above 60 °C. As a consequence, the non-fully fluorinated inner liner becomes harder and may shrink considerably.

The high-grade fluoropolymer as inner liner provides an excellent barrier to gas. Having regard to the low permeation rate of high-grade fluoropolymers (an order of magnitude slower than through rubber), gas only permeates through the inner liner at a low speed so that the more permeable polymer filler does never become saturated.

The permeated gas can escape radially from the polymer filler at least at the same speed as it permeates. So no gas pressure is built up inside the flexible duct. As a consequence, the elongated steel members are not subject to hydrogen induced corrosion cracking and sulfide stress corrosion cracking to the same extent as are steel reinforcements in prior art flexible ducts. As a result the tensile strength of the steel members is not longer strictly limited. Tensile strengths above 2000 MPa, e.g. above 2500 MPa, e.g. 2600 MPa, above 3000 MPa and even above 3500 MPa are not excluded.
Any polymer may form the polymer filler, which is more permeable to gas than the inner liner. An example is polyethylene. Preferably, however, is to use rubber, e.g. a silicone rubber as filler material.
Rubber is preferred because of its low cost, because of its resistance against higher temperatures and / or because of its netted structure after vulcanization. It is hereby understood that rubber can withstand temperatures of about 200 °C while polyethylene can withstand temperatures of about 120 °C.

Preferably the elongated steel members are steel cords. In comparison with profiled steel wires conveniently used in prior art flexible ducts, steel cords give the flexible duct an increased flexibility. The steel cords are helically wound in two or more layers in the rubber filler. Due to this increased flexibility and this helical winding, upheaval buckling is a much lower risk than is the case for prior art flexible ducts.

Preferably the steel cords used for the reinforcement of the flexible duct according to the invention have an open structure so that rubber can penetrate between the individual steel filaments. This rubber penetration increases the fully bonded character of the flexible duct. Steel cords having an open structure are known as such in the art.

Generally three types of open steel cord structures can be distinguished.

In a first type of open steel cord, the steel cord is radially open. This means that the individual steel filaments of a steel cord occupy in the steel cord a location which is on average more remote from the central axis of the steel cord than would be the case of a closed compact structure. This remote location can be obtained by plastically deforming the individually steel filaments. The more remote location creates gaps between the individual filaments. An example of such an open steel cord of the first type is disclosed in US-A-4,258,543.

A second type of open steel cord is tangentially open. These types of steel cord have one or more layers of steel filaments and these layers are not saturated, i.e. in such a layer the steel filaments do not contact each other. Unsaturated layers can be obtained by using fewer filaments than in a saturated layer or by using smaller filament diameters than in a saturated layer or by a combination of both. An example of such an open steel cord of the second type is disclosed in US-4,158,946.

The third type of open steel cord is longitudinally open. Such a steel cord exhibits along its length various different cross-sections. Some cross-sections are compact and closed. Other cross-sections are open and allow the rubber to penetrate and to travel along the length of the steel cord so as to fill up all gaps between the steel filaments. An example of such an open steel cord of the third type is disclosed in US-A-4,408,444.

In a particular embodiment of the flexible duct according to the invention some or all of the reinforcing steel cords have an elongation at fracture greater than three and a half per cent, e.g. greater than five per cent, e.g. greater than six per cent. It is hereby understood that conventional steel cord only has an elongation at fracture of about two and a half per cent. Steel cords with high elongation give the reinforced flexible duct the capability to absorb high impact energies.

Such steel cords with high elongation are preferably used in the radially outer layers of the flexible ducts.

Such a high elongation can be obtained in various ways.

A first way is loosely twisting a Lang's lay cord : the strands of a multiple strand cord are loosely twisted in the same twisting direction as the twisting direction of the strands themselves, SS or ZZ.

A second way is subjecting the twisted steel cord to an appropriate stress-relieving heat treatment, as has been disclosed in US-A-5,843,583.

Still another way to obtain a high elongation is plastically deforming the individual steel filaments, and possibly also the individual strands in case of a multiple strand steel cord, so that they present a wavy form which gives to the final steel cord a high degree of structural elongation. Such a cord has been disclosed in WO-A-99/28547.

Preferably the elongated steel elements have a high adhesion with the rubber filler. Such adhesion may be expressed by the pull-out-force required to pull the steel elements out of the rubber filler. The pull-out-force is higher than 500 Newton, preferably higher than 750 Newton. This high adhesion level may be obtained by coating the steel element with brass. Another way is to coat the steel element with a zinc alloy and to use an organic adhesion promoter or a coupling agent. For example, coatings with bi-functional organic molecules may be applied to the zinc alloy plating. Organic molecules with two functional end chains compose these bi-functional organic molecules. One end chain which gives the adhesion with the zinc and and one end chain which gives the adhesion with the rubber filler. Examples of these organic molecules are bifunctional silanes or organofunctional alkoxysilanes, such as aminofunctional silanes.

Examples of molecules for coupling agents are :
(RO)₃-Si-(CH₂)ₙ - NH₂ : 3-aminoalkyltrialkoxysilane
   n = 2 : aminoethyl
   n = 3 : aminopropyl
   n = 4 : aminobutyl
   R = CH₃ : methoxysilane
   R = C₂H₅: ethoxysilane
(RO)₃-Si-(CH₂)₃-NH-(CH₂)₂-NH₂ : N-(2-aminoethyl)-3-aminopropyltrialkoxysilane CH₂-CH-CH₂-NH-CH₂-CH₂-CH₂-Si(OR)₃: 3-(N-allylamino)propyltrialkoxysilane A hydrogen or an alkyl group such as methyl or ethyl or isopropyl groups may also substitute one or two of the alkoxy groups linked to Si.
The coupling agents may be used alone or as primers for and in combination with commercial adhesives.

The elongated steel elements are helically wound in at least two layers at opposite angles in order to balance each other. In other words if one layer is wound at an angle of α, the other angle is wound at an angle of - α. For example, the flexible duct can be reinforced by means of four layers of steel cord. The two radially inner layers are arranged at angles ranging from +70° to +85°and from -85° to -70° resp. The third and fourth layers, the radially outer layers are arranged at angles ranging from +15° to +35° and from -35° to -15°.
Possibly the steel cords may alternate in twist direction : an S-twisted steel cord may be alternated with a Z-twisted steel cord etc.
The changing of the winding angle as well as the presence or not of an inter lock layer, changes the modulus in longitudinal and radial direction. The neutral angle may also be used as winding angle for the steel cord. This neutral angle is the angle where the elongation in radial direction is equal to the elongation in longitudinal direction.

The use of this winding angle prevents big movements and results in low stress variations. This neutral angle is equal to 54.73°.

### Brief description of the drawings.

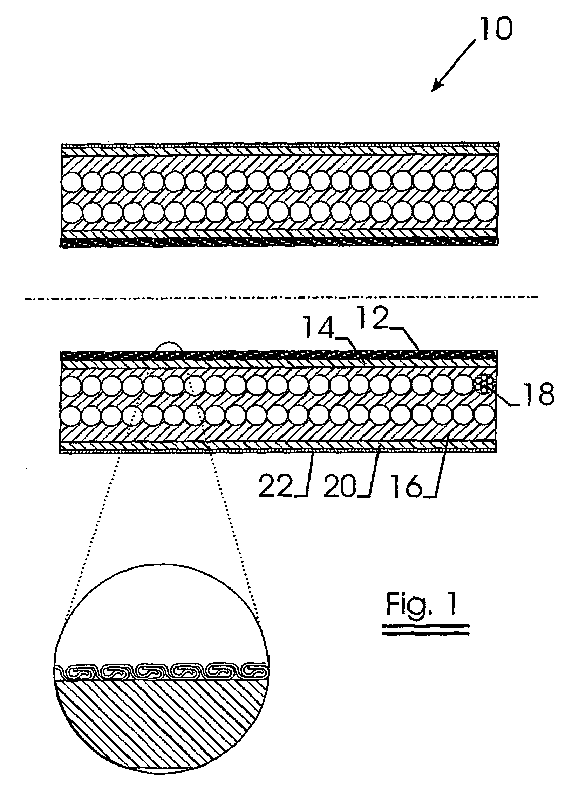

The invention will now be described into more detail with reference to the accompanying drawings wherein
- FIGURE 1 is a longitudinal cross-section of a flexible duct according to the invention.

### Description of the preferred embodiments of the invention.

FIGURE 1 shows a longitudinal cross-section of a flexible duct 10 according to the invention.
Starting from the internal bore of the flexible duct 10, following layers are shown :
a) a steel interlock layer 12 may be present, although this is not necessary ; without interlock layer 12 the flexible duct can flatten and recover its initial shape without damage ;
b) an inner liner 14 of high-grade fluoropolymers (ETFE, FEP or PFA) gives the flexible duct 10 the required chemical and temperature resistance and slows down the permeation of gas into the flexible duct; these polymers do not leach out, so that potable water can be transported;
c) a rubber filler 16 fills the main body of the flexible duct 10; the rubber in filler 16 is preferably a silicone rubber, a nitrile rubber or a hydrogenated nitrile rubber;
   two layers of helically wound steel cords 18 reinforce the rubber filler ; the steel cords 18 are bonded to the filler rubber during a vulcanization process so that relative movement of the steel cords is prevented ; in comparison with profiled steel wires of the prior art, the steel cords 18 show no sharp edges ; this absence of sharp edges reduces fretting ;
d) a rubber cover 20 is laid over the rubber filler 16 ; the rubber cover 20 is preferably a chloroprene or hypalon rubber;
e) The radially external layer is a skin 22 out of an ultra high molecular weight polyethylene skin.

Steel compositions suitable for the manufacture of steel cords are along following lines: a carbon content ranging from 0.70 % to 1.0 %, a silicon content ranging from 0.10 % to 1.0 %, a manganese content ranging from 0.10 % to 0.60 , a maximum phosphorous content of 0.05 %, a maximum sulfur content of 0.05 %, the remainder being iron. Additional micro-alloying elements such as chromium may be added in amounts ranging up to 0.40 %.
As a matter of example, the carbon content is 0.92 %, the manganese content 0.30 %, the chromium content 0.20 %, and the silicon content 0.20 %.

Starting from a wire rod with the above-mentioned composition, the steel wires are drawn in subsequent drawing steps until a final steel filament. Intermediate patenting treatments between two series of drawing steps may facilitate further drawing.

The steel filaments are conveniently coated with a metallic layer such as brass (63.5 - 67.5 % Cu + 36.5 - 32.5 % Zn) zinc, or a zinc alloy (example: Zn + 2 à 12 % Al + possibly a Mischmetal such as cerium or lanthanum) in order to facilitate the final drawing steps and/or to provide an adhesion with the elastomer or to provide a corrosion resistance.

The steel filaments are then twisted together into a steel cord 18 by means of a conventional tubular twisting apparatus of by means of a double-twister.

Following steps can be taken to embed the steel cords 18 into the rubber filler 16.

The steel cords 18 may be individually coated by a rubber or by a polymer by means of an extrusion process or by means of a vulcanization process.
A preferable method, however, is extruding or vulcanizing a number of parallel steel cords into a flat strip and helically winding this strip when manufacturing the flexible duct 10.

High levels of adhesion between the steel cords and the rubber filler have been noticed.
As a matter of example only, with 7x7x0.35 zinc coated steel cords treated with an organo-functional silane, adhesion levels of 985 Newton have been reached (adhesion level = pull out force in Newton for a length of embedment of 25.4 mm). With 7x7x0.35 brass-coated steel cords, adhesion levels of 966 Newton have been reached.

A weight comparison has been made between a flexible duct according to the invention and a non-bonded flexible duct reinforced by means of low tensile profiled steel wires.
Table 1 hereunder summarizes the results.

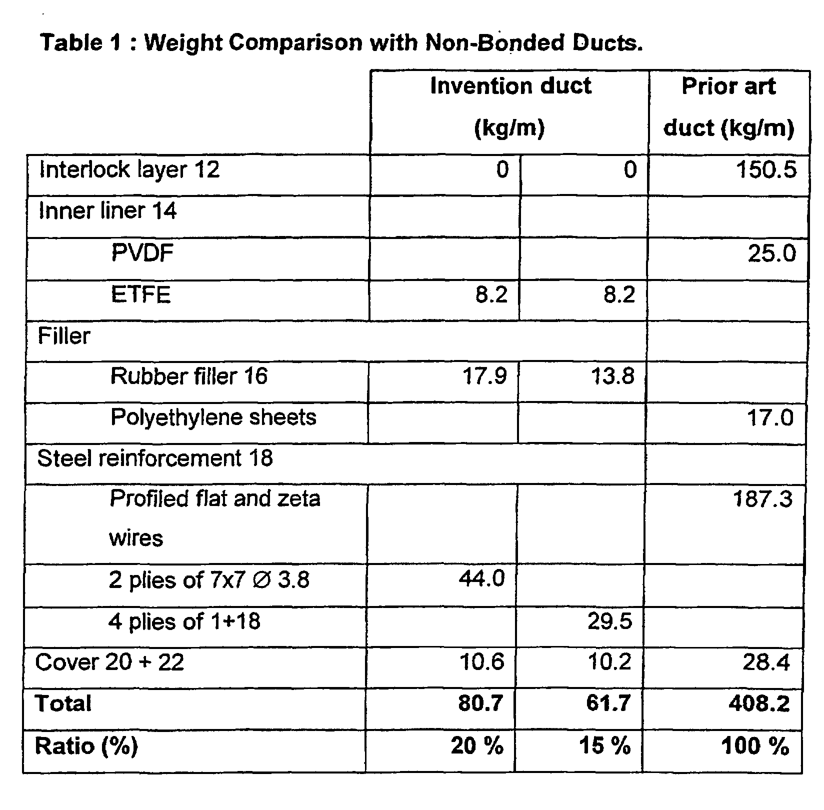

Another weight comparison has been made between a bonded flexible duct according to the invention and a bonded flexible duct according to the prior art.
Table 2 summarizes the results.

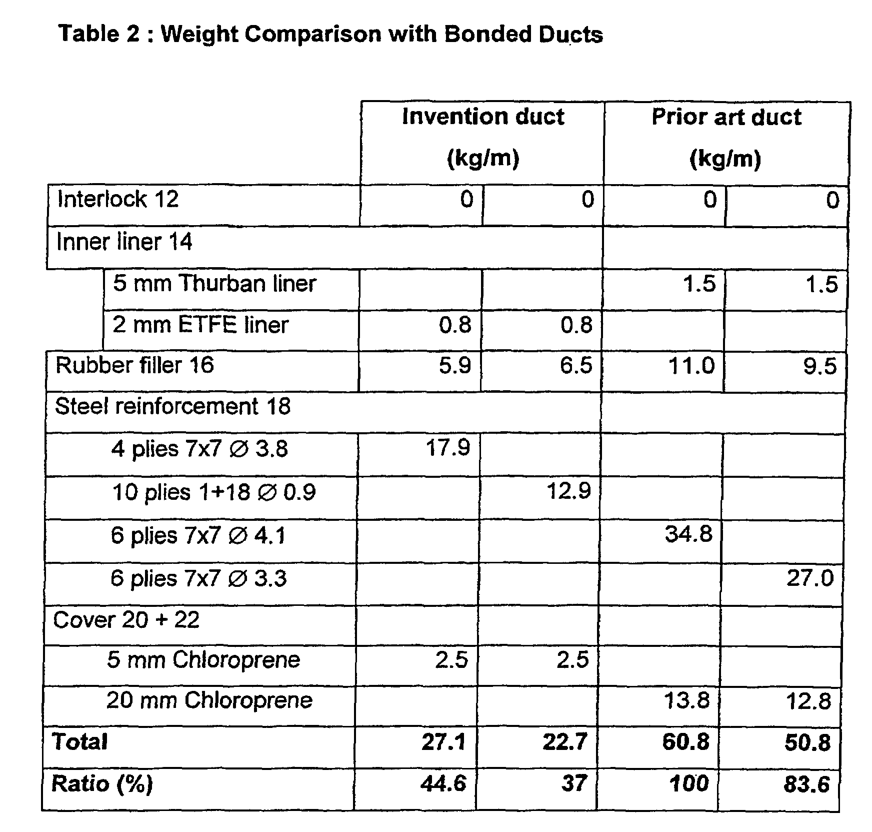

Flexible ducts according to the invention are suitable to transport various types of fluids such as potable water, other water, oil, gases, chemicals such as halogens, bromides, bases, acids, oxidizing agents, ketones, esters, amines, organic acids, sulfuric acids, nitric acids and strong caustics.
Particularly for transportation of crude oil and gas in the offshore industry, the flexible ducts can be used as riser, pipeline, flowline, jumper, topside tie-in, subsea tie-in, drag chain, spool piece, choke and kill etc... Flexible ducts according to the invention can be used in various types of utility applications such as arctic and desert transportation of water and chemicals.
Flexible ducts according to the invention can also be used in the onshore petroleum industry and for industrial and domestic utilities.

## Claims

1. A flexible duct comprising :
either fully fluorinated polymers as internal liner, or
fluoropolymers comprising an ethylene group or an alkoxyl group as internal liner,
a polymer filler,
at least two layers of elongated steel members as reinforcement, said elongated steel members having a tensile strength of at least 2000 MPa,
said elongated steel members being embedded in said polymer filler so as to form a fully-bonded structure.

2. A flexible duct according to claim 1 wherein said polymer filler is a rubber filler.

3. A flexible duct according to claim 1 wherein said elongated steel member is a steel cord.

4. A flexible duct according to claim 1 wherein said tensile strength is at least 2600 MPa.

5. A flexible duct according to claim 3 wherein said steel cord has an open structure allowing rubber to penetrate.

6. A flexible duct according to claim 3 wherein said steel cord has an elongation at fracture greater than five per cent (5 %).

7. A flexible duct according to claim 1 wherein the adhesion force between said elongated steel member and said rubber is at least 500 Newton.

8. A flexible duct according to claim 1 wherein said elongated steel member is coated with organofunctional silanes.

9. A flexible duct according to claim 1 wherein said elongated steel members are helically wound in said at least two layers at opposite angles so as to balance each other.

10. A method of avoiding hydrogen blistering and sulfide stress corrosion cracking in steel reinforcements of a flexible duct, according to claims 1-9, said method comprising following steps :
(a) providing elongated steel members with a tensile strength greater than 2000 MPa ;
(b) embedding said elongated steel members in a polymer filler so as to form a fully-bonded body for said flexible duct ;
(c) providing fully fluorinated polymers or fluoropolymers comprising an ethylene group or an alkoxyl group as inner liner for said flexible duct so as to reduce the permeation of hydrogen sulfides into said polymer filler.

11. A method of reducing the weight of flexible ducts, according to claims 1-9 said method comprising following steps:
(a) providing elongated steel members with a tensile strength greater than 2000 MPa so as to reduce the number of reinforcement layers and to reduce the weight of said flexible ducts;
(b) embedding said elongated steel members in a polymer filler so as to form a fully-bonded body for said flexible duct ;
(c) providing fully fluorinated polymers or fluoropolymers comprising an ethylene group or an alkoxyl group as inner liner for said flexible duct.

12. A method of reducing damage caused by upheaval buckling to a flexible duct, according to claims 1-9 said method comprising following steps :
(a) providing elongated steel cords with a tensile strength greater than 2000 MPa as reinforcement for said flexible duct so as to give to said flexible ducts the required flexibility to reduce upheaval buckling damage;
(b) embedding said elongated steel cord in a polymer filler so as to form a fully-bonded body for said flexible duct ;
(c) providing fully fluorinated polymers or fluoropolymers comprising an ethylene group or an alkoxyl group as inner liner for said flexible duct.

## Patentansprüche

1. Flexible Rohrleitung mit:
entweder vollständig fluorierten Polymeren als innerer Auskleidung oder Fluorpolymeren, die eine Ethylengruppe oder Alkoxylgruppe umfassen, als innerer Auskleidung,
einem Polymerfüllstoff,
zumindest zwei Schichten aus länglichen Stahlelementen mit einer Dehnfestigkeit von zumindest 2000 MPa,
wobei die länglichen Stahlelemente in dem Polymerfüllstoff eingebettet sind, um eine vollständig gebundene Struktur zu bilden.

2. Flexible Rohrleitung nach Anspruch 1, wobei der Polymerfüllstoff ein Gummifüllstoff ist.

3. Flexible Rohrleitung nach Anspruch 1, wobei das längliche Stahlelement ein Stahlseil ist.

4. Flexible Rohrleitung nach Anspruch 1, wobei die Dehnfestigkeit zumindest 2600 MPa beträgt.

5. Flexible Rohrleitung nach Anspruch 3, wobei das Stahlseil eine offene Struktur aufweist, die das Eindringen von Gummi erlaubt.

6. Flexible Rohrleitung nach Anspruch 3, wobei das Stahlseil eine Bruchdehnung größer als fünf Prozent (5%) besitzt.

7. Flexible Rohrleitung nach Anspruch 1, wobei die Adhäsionskraft zwischen dem länglichen Stahlelement und dem Gummi zumindest 500 Newton beträgt.

8. Flexible Rohrleitung nach Anspruch 1, wobei das längliche Stahlelement mit organofunktionellen Silanen beschichtet ist.

9. Flexible Rohrleitung nach Anspruch 1, wobei die länglichen Stahlelemente schraubenförmig in den zumindest zwei Schichten unter entgegengesetzten Winkeln gewickelt sind, so dass sie sich gegenseitig ausgleichen.

10. Verfahren zum Vermeiden von Wasserstoffversprödungen und Sulfid-Spannungskorrosion in Stahlbewehrungen einer flexiblen Rohrleitung nach Anspruch 1 - 9, das folgende Schritte umfasst:
(a) Bereitstellen von länglichen Stahlelementen mit einer Dehnfestigkeit größer als 2000 MPa,
(b) Einbetten der länglichen Stahlelemente in einem Polymerfüllstoff, um einen vollständig gebundenen Körper für die flexible Rohrleitung zu bilden,
(c) Bereitstellen von vollständig fluorinierten Polymeren oder Fluorpolymeren, die eine Ethylengruppe oder Alkoxylgruppe umfassen, als innere Auskleidung für die flexible Rohrleitung, um die Permeation von Wasserstoffsulfiden in den Polymerfüllstoff zu reduzieren.

11. Verfahren zur Reduzierung des Gewichts von flexiblen Rohrleitungen nach Anspruch 1 - 9, das folgende Schritte umfasst:
(a) Bereitstellen von länglichen Stahlelementen mit einer Dehnfestigkeit größer als 2000 MPa, um die Anzahl von Bewehrungsschichten zu reduzieren und das Gewicht der flexiblen Rohrleitungen zu reduzieren,
(b) Einbetten der länglichen Stahlelemente in einem Polymerfüllstoff, um einen vollständig gebundenen Körper für die flexible Rohrleitung zu bilden,
(c) Bereitstellen von vollständig fluorinierten Polymeren oder Fluorpolymeren, die eine Ethylengruppe oder Alkoxylgruppe umfassen, als innere Auskleidung für die flexible Rohrleitung.

12. Verfahren zur Reduzierung der Schädigung, die durch Upheaval Buckling an einer flexiblen Rohrleitung nach Anspruch 1 bis 9 verursacht wird, das folgende Schritte umfasst:
(a) Bereitstellen von länglichen Stahlseilen mit einer Dehnfestigkeit größer als 2000 MPa als Bewehrung für die flexible Rohrleitung, um der flexiblen Rohrleitung die erforderliche Flexibilität zu verleihen, um das Upheaval Buckling zu reduzieren,
(b) Einbetten des länglichen Stahlseils in einem Polymerfüllstoff, um einen vollständig gebundenen Körper für die flexible Rohrleitung zu bilden,
(c) Bereitstellen von vollständig fluorinierten Polymeren oder Fluorpolymeren, die eine Ethylengruppe umfassen, als innere Auskleidung für die flexible Rohrleitung.

## Revendications

1. Conduit flexible, comprenant:
soit des polymères complètement fluorés comme garnissage interne, soit des fluoropolymères comprenant un groupe éthylène ou un groupe alkoxyle comme garnissage interne,
un agent de remplissage polymère,
au moins deux couches d'éléments d'acier allongés comme renforcement, lesdits éléments d'acier allongés présentant une résistance à la traction d'au moins 2000 MPa,
lesdits éléments d'acier allongés étant incorporés. dans ledit agent de remplissage polymère de manière à former une structure complètement liée.

2. Conduit flexible suivant la revendication 1 dans lequel ledit agent de remplissage polymère est un agent de remplissage composé de caoutchouc.

3. Conduit flexible suivant la revendication 1 dans lequel ledit élément d'acier allongé est un câble d'acier.

4. Conduit flexible suivant la revendication 1 dans lequel ladite résistance à la traction est d'au moins 2600 MPa.

5. Conduit flexible suivant la revendication 3 dans lequel ledit câble d'acier présente une structure ouverte qui permet au caoutchouc de pénétrer.

6. Conduit flexible suivant la revendication 3 dans lequel ledit câble d'acier présente un allongement à la rupture supérieur à cinq pour cent (5%).

7. Conduit flexible suivant la revendication 1 dans lequel la force d'adhérence entre ledit élément d'acier allongé et ledit caoutchouc est d'au moins 500 Newton.

8. Conduit flexible suivant la revendication 1 dans lequel ledit élément d'acier allongé est revêtu de silanes organo-fonctionnels.

9. Conduit flexible suivant la revendication 1 dans lequel lesdits éléments d'acier allongés sont enroulés d'une façon hélicoïdale dans lesdites au moins deux couches selon des angles opposés de manière à s'équilibrer mutuellement.

10. Procédé pour éviter la formation de cloques d'hydrogène et la formation de fissures de corrosion sous contrainte par des sulfures dans des renforcements d'acier d'un conduit flexible suivant les revendications 1 à 9, ledit procédé comprenant les étapes suivantes:
(a) la fourniture d'éléments d'acier allongés présentant une résistance à la traction supérieure à 2000 MPa;
(b) l'incorporation desdits éléments d'acier allongés dans un agent de remplissage polymère de manière à former un corps complètement lié pour ledit conduit flexible;
(c) la fourniture de polymères complètement fluorés ou de fluoropolymères comprenant un groupe éthylène ou un groupe alkoxyle comme garnissage interne pour ledit conduit flexible de manière à réduire la perméation de sulfures d'hydrogène dans ledit agent de remplissage polymère.

11. Procédé pour réduire le poids de conduits flexibles suivant les revendications 1 à 9, comprenant les étapes suivantes:
(a) la fourniture d'éléments d'aciers allongés présentant une résistance à la traction supérieure à 2000 MPa en vue de réduire le nombre de couches de renforcement et de réduire le poids desdits conduits flexibles;
(b) l'incorporation desdits éléments d'acier allongés dans un agent de remplissage polymère de manière à former un corps complètement lié pour ledit conduit flexible;
(c) la fourniture de polymères complètement fluorés ou de fluoropolymères comprenant un groupe éthylène ou un groupe alkoxyle comme garnissage interne pour ledit conduit flexible.

12. Procédé pour réduire les dégâts causés par le flambage par surrection à un conduit flexible suivant les revendications 1 à 9, ledit procédé comprenant les étapes suivantes:
(a) la fourniture de câbles, d'acier allongés présentant une résistance à la traction supérieure à 2000 MPa comme renforcement pour ledit conduit flexible de manière à conférer audit conduit flexible la flexibilité requise pour réduire l'endommagement dû au flambage par surrection;
(b) l'incorporation dudit câble d'acier allongé dans un agent de remplissage polymère de manière à former un corps complètement lié pour ledit conduit flexible;
(c) la fourniture de polymères complètement fluorés ou de fluoropolymères comprenant un groupe éthylène ou un groupe alkoxyle comme garnissage interne pour ledit conduit flexible.
